# EUROPEAN PATENT SPECIFICATION

(11) **EP 1 542 550 B1**
(45) Date of publication and mention of the grant of the patent: **15.11.2006**
(21) Application number: 03748153.8
(22) Date of filing: 05.09.2003
(51) Int. Cl.: A23L 3/015, A23L 3/16

(54) **EDIBLE PRODUCT COMPRISING STARCH-CONTAINING MATERIAL AND PROCESS FOR PREPARING THE SAME**
ESSBARES PRODUKT MIT STÄRKEHALTIGEM MATERIAL UND HERSTELLUNGSVERFAHREN DAFÜR
PRODUIT COMESTIBLE COMPRENANT UNE MATIERE CONTENANT DE L'AMIDON ET PROCEDE DE PREPARATION DE CELUI-CI

(30) Priority: 06.09.2002 FI 20021593
(43) Date of publication of application: 22.06.2005
(73) Proprietor: Ravintoraisio Oy, 21200 Raisio (FI)
(72) Inventor: LIUKKO, Raimo, FIN-86400 Vihanti (FI)
(74) Representative: Svensson, Johan Henrik
(86) International application number: PCT/FI2003/000656
(87) International publication number: WO 2004/021805

(56) References cited:
- EP-A1- 0 326 622
- GB-A- 1 090 550
- US-A- 5 855 941
- PATENT ABSTRACTS OF JAPAN & JP 61 280 244 A (KIKKOMAN CORP) 10 December 1986

## Description

The invention relates to an edible gelly product containing a starchy vegetable material and to a process for preparing the same.

People's eating habits are changing. The trend is towards meals taken in increasingly shorter time and requiring less preparation to meet the energy need. Lack of exercise and use of too rapidly absorbed foodstuffs have resulted in overweight as a widespread national health hazard in all the Western countries. The proportion of overweight persons (weight index above 25) and fat persons (weight index above 30) of the Finnish population is already approx. 50%.

The recommended carbohydrate proportion of the daily energy intake is 55 to 60%, with carbohydrates absorbed as slowly as possible. Starch is the chief energy-producing food component, and in nutritional terms, it is vital to transform starch into a form having slower absorption. The structure and state of starch has a great impact on its absorption rate. Native starch has markedly slower absorption than gelatinised starch. Amylose-rich starch is absorbed at a slower rate and retrograded amylose is very slowly absorbed. It is possible to act on the absorption rate of starch by means of the food processes. The starch in crude potatoes is very resistant, whereas in boiled potatoes, it is rapidly absorbed.

For a majority of people, the number of versatile meals has boiled down to one single meal per day. With changing eating habits, snacks such as puddings and yoghurt get an increasing importance as part of the daily food intake. The nutritional content of these preparations, and also their suitability for persons with various food allergies will become increasingly important.

The snack products currently available in the market have been prepared principally by two methods. The main group consists of preparations made by acidification, such as various types of yoghurt. The acidifying agent has the function of structuring agent for the product, either alone or together with a thickening agent, starch, pectin, carrageen or the like. The acidifying agents acts partly also as a flavouring agent and, together with an aseptic package, it also contributes to longer preservability, i.e. saleability. These products are usually dairy products, even though a number of similar oat and soya based products have been gradually launched (non-dairy products).

Another group of preparations consists of products of pudding type. These are usually also based on milk, or in non-dairy alternatives, milk is replaced by raw materials such as e.g. soya, oat and rice. Either one thickening agent or a combination of several such agents provides the structure of these products. Common thickening agents are various starches, starch modifications, pectins, alginates, carrageen, gelatine, guargum, etc. The preservability of these preparations is based either on preservatives or the ultra-high temperature method (UHT) combined with aseptic packaging.

Among current products, dairy products exclude all those who suffer from milk allergy. Soya may also cause allergy, and what is more, the use of soya preparations is limited by uncertainty regarding GMO purity or ensured GMO purity in the near future. The bitter flavour typical of soya is also an undesired property. Recently launched products comprise e.g. fermented oat-based products taken in the same way as yoghurts, which some consumers may find to have an excessively oat-like flavour and gelly consistency.

From a nutritional point of view, potatoes are very versatile, but in spite of this, the consumption of potatoes has dropped below nutritional recommendations. The reduced number of daily meals also appears as diminishing potato consumption. Various potato dishes and conventional potato side dishes are felt as everyday food, and for this reason, potatoes have lost their attraction in favour of various rice and pasta dishes. The same is true for various forms of oil-matured products called "French fries". The consumption of potato chips alone is increasing, which, in turn, is due to the growing impact of snacks. By utilising the process of the invention described below, potatoes will find a completely new field of application in an increasing product group, which will result in increased potato consumption.

The nutritive composition of potato, including cells and nutrients within the cells, is superior to pure starch and to other thickeners. So far, the structure of the formed gel has restricted its use. Gel gives the potato a typically coarse and sandy structure; it feels unpleasant in the mouth. The gel is not stable, the liquid bound to potato starch being released and forming a clear liquid phase distinguished from the solid substance in the product. In fact, the use of potatoes in desserts and various types of puddings is limited to the use of potato starch, and consequently the remaining potato nutrients are not utilised in such applications.

Starches (native and modified) are commonly used as structuring agents in foodstuffs. Chemically modified starches have the inconvenience of being declared under E numbers. Native starches are less strong and permanent gelling agents, which sets a limit to their use. There are also resistant starches on the market (e.g. Hylon®/National Starch and C*ActiStar®/Cerestar), which, owing to their inabsorbability, are used to increase the fibre content of foodstuffs. After intake in large amounts, they may cause meteorism.

The starch of boiled potatoes is rapidly absorbed and it contains resistant starch only in small amounts. The starch consists of branched amylopectin and amylose. Of these two, amylopectin is rapidly soluble. When potatoes are boiled, the starch grain binds water and gelatinises within the cell, while the cells remain intact. This yields a structure that feels like sand in the mouth.

Starchy food and also potatoes are usually used in a matured form in foodstuffs. The commonly used maturing methods comprise various cooking methods, such as water, steam, pressure, vacuum cooking, microwave or infrared maturing, plate heat exchangers, extrusion techniques, UHT processing, autoclave treatments, baking processes, etc. as e.g. in GB 1090550.

Vacuum cooling of food has been commonly used for fast cooling of the food. With the use of this process, the residence time of the food at temperatures optimal for contaminating microbes is minimised, thus achieving better preservability of the food than with the use of other slower cooling processes (such as cooling of Artic lettuce after it has been picked or cooling of convenience food meals after preparation) and/or avoiding undesired flavour and colour alterations (e.g. dairy products such as cheese spread, puddings, cream, or soups, sauces).

The inventors have surprisingly found that fast cooling of hot starchy vegetable material mass under decreased pressure results in breakage of the cell walls and modified structure of the starch grains, so that the starch grains decompose and a different gel structure is formed as amylose is dispersed in amylopectin. This will result in a homogenous, soft gel structure, which feels very nice in the mouth, which cannot be achieved by conventional potato processing methods or other processing of vegetable materials rich in starch. As amylose is dispersed in the starch matrix with the amylose forming a uniform gel, a starch is formed that is more slowly absorbed and has high nutritional value, given the high resistance of amylose gel.

When amylose is dispersed into amylopectin under the effect of the fast pressure drop, the cell content is dispersed into the medium liquid (e.g. water), which is thickened by the cooled starch matrix. The liquid quantity should be sufficient for the edible product to get an at least 60 % by weight water content with a view to adequate dispersion in order to achieve a structure of the desired kind. Increased temperature and pressure differences also yield different dispersions and structures of the end product. The outcome is optimal when the vegetable material cells are practically completely broken and dispersion is complete. At the same time, the formed gel is less exposed to syneresis. In practice, excellent results have been obtained e.g. with temperature drops from 140°C to 60°C and pressure drops from 600 kPa to 20 kPa.

In accordance with the invention, a gelly edible product containing starchy vegetable material has thus been obtained, in which at least 50%, preferably at least 75% and more advantageously at least 90% of the vegetable material cells are broken and the amylose of the starchy vegetable material has been dispersed into under 10 µm amylose particles within the amylopectin of the starchy vegetable material, the water content of the product being at least 60 % by weight.

In this context, "%" implies percent of the cell number determined on microscopic views, for instance.

The amylose particles mentioned above have a size preferably in the range from 0.0005 to 5 µm, more preferably from 0.005 to 1 µm.

The water content of the product of the invention is preferably at least 70 % by weight. Increased water content enhances dispersion and produces an increasingly regular product structure.

The product of the invention may also comprise one or more components selected from the following group: spices or other flavouring agents, colouring agents, structure modifying agents, preserving agents, nutritional and health-promoting components.

The product of the invention is preferably in the form of a pudding, a puree or a soup.

In accordance with the invention, a process has also been provided for preparing a gelly edible product containing a starchy vegetable material, the process comprising the following steps:
a) heating a vegetable material at a temperature of at least 100 °C under pressure in an aqueous medium, followed by
b) rapid cooling of the heated product by dropping the pressure by at least 100 kPa, whereby at least 50%, preferably at least 75% of the vegetable material cells is broken and the amylose of the starchy vegetable material is dispersed into under 10 µm amylose particles within the amylopectin of the starchy vegetable material, yielding a product having a water content of at least 60 % by weight, preferably at least 70 % by weight.

The vegetable material may be corn, vegetables, greens or mixtures of these. The vegetable material is preferably a tuberous root, preferably potato. The product of the invention may comprise the entire cell mass of this vegetable material, especially if the vegetable material is a tuberous root, preferably potato. The peel portion or similar of the vegetable material has naturally been removed.

The amount of starch derived from vegetable material may account for 2 to 70 % by weight, preferably 3 to 50 % by weight, more preferably 5 to 40 % by weight of the dry substance of the gelly edible product. The remainder of the dry substance consists of the residual part of vegetable material and the other desired components of the edible product, which may be selected from the following group: spices or other flavouring agents, colouring agents, structure-modifying agents, preservative agents, nutritional and health-promoting components, such as e.g. sugar, fat, berries, fruit, milk, vegetables, meat, fish and spices.

In the edible product, at the most 10 % by weight, preferably at the most 5 % by weight, and more preferably at the most 3 % by weight of the starch in the vegetable material has decomposed into mono, di and oligosaccharides, compared to the starch quantity before the processing of the invention, in other words, compared to the starch quantity of the vegetable material acting as the raw material. This is due to the fact that the process avoids operations that actively split the starch. The purpose of the invention is to modify the starch structure of the vegetable material and to utilise the formed matrix structure as a structuring agent of the gelly edible product. The process of the invention, comprising processing of starchy vegetable material, also avoids enzymatic processing and/or fermentation, which would split or modify the starchy material and/or other raw materials of the edible product, such as milk.

In the process of the invention, the pressure is decreased in the cooling step b) preferably by at least 200 kPa, more preferably by at least 300 kPa, most preferably by at least 500 kPa.

In the heating step a), the pressure may be in the range 200 to 1,500 kPa, preferably 300 to 1,000 kPa, more preferably 500 to 700 kPa.

In the heating step a), the temperature may be in the range 120 to 200 °C, preferably 130 to 180 °C, more preferably 140 to 160 °C.

In the cooling step b), the pressure may be dropped to a pressure of 10 to 300 kPa, preferably 10 to 100 kPa, more preferably 10 to 80 kPa, most preferably 15 to 25 kPa.

In the cooling step b), the temperature may be dropped to a temperature of 40 to 120 °C, preferably 40 to 100 °C, more preferably 40 to 80 °C, most preferably 60 to 65 °C.

In the cooling step b), the pressure is preferably dropped by leading the heated product to a vacuum space. The pressure can also be decreased by releasing overpressure down to normal pressure.

In the heating step a), heating can be rapidly carried out, preferably by means of hot pressurised water steam, at a temperature of at least 120 °C. The duration of such a rapid heating step may be 1 to 60 s, preferably 2 to 10 s. At a lower temperature, the heating step may have longer duration.

The vegetable material may be matured before the heating step a).

Water is added to the vegetable material before the heating step a) and/or before the maturing. In addition, part of the water can be added during the heating step a). Flavouring and/or colouring agents can also be added to the vegetable material before the heating step a) or before the maturing.

After the cooling step b), additives are possibly still added to the product and, if necessary, the product is further cooled in order to form a gelly product.

After the cooling step b), the product may be cooled to packaging temperature by means of other known cooling methods, such as various types of surface heat exchangers.

The edible product is preferably packaged before gelification to form a product that can be spooned up.

The invention is further described below with reference to the accompanying drawings, in which
figure 1 is a microscopic view of potato starch within a potato cell before the processing of the invention,
figure 2 is a microscopic view of a product, which has been obtained by processing the product of figure 1 in accordance with the invention,
figure 3 is a microscopic view of another potato starch within a potato cell before the processing of the invention, and
figure 4 is a microscopic view of a product, which has been obtained by processing the product of figure 3 in accordance with the invention.

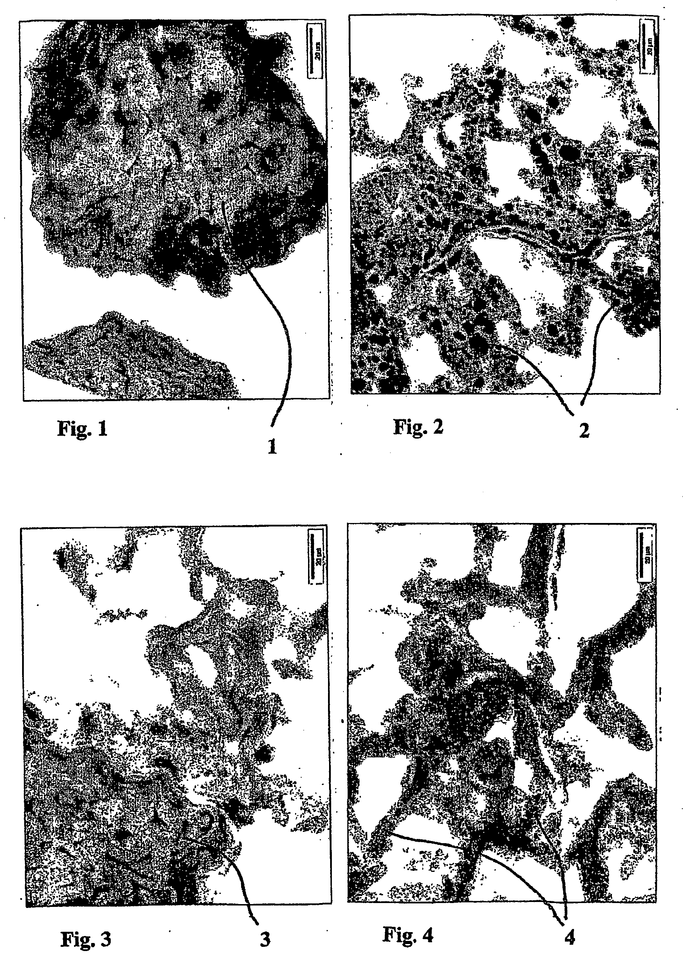

Regarding figures 1 to 4, the samples were prepared by cutting thin slices from cooled samples, and by dying the slices with iodide with a view to microscopic imaging. In figures 1 to 4, amylose looks dark, whereas amylopectin looks lighter (grey).

Figure 1 shows a starch grain of boiled mashed potatoes, marked with reference numeral 1. This starch grain is surrounded by the cell wall.

Figure 2 shows a product obtained by heating boiled mashed potatoes (figure 1) in an aqueous medium with steam at 145 °C (pressure approx. 500 to 600 kPa) for 2.5 seconds and by immediate cooling to 60 °C under a pressure of 20 kPa. The amylose particles dispersed within the amylopectin are marked with reference numeral 2.

Figure 3 shows a starch grain that has been formed by adding a potato grain to hot water (90 °C). The starch grain is marked with reference numeral 3. Part of the cell walls has degraded due to the thermal treatment.

Figure 4 shows a product that has been obtained by heating a potato grain treated with hot water as shown in figure 3 in an aqueous medium with steam 145 °C ((pressure approx. 500 to 600 kPa) for 2.5 seconds and by immediate cooling to 60 °C under a pressure of 20 kPa. The amylose particles dispersed within amylopectin are marked with reference numeral 4.

When the starchy mixture heated by direct pressurised steam was brought to vacuum state in an aqueous medium, it was surprisingly found that the process produces an effect in the structure that has not been previously found. Studies of the effects of different temperature/pressure differences resulted in smooth, soft, pudding-like products produced from potato, rice and roots. A closer analysis showed that the effect was produced by even splitting of the cell walls and even dispersion of amylose in the amylopectin matrix (cf. microscopic views 2 and 4). The structure of the invention is generated when starch is split into amylose particles having a diameter less than 10 µm. However, the smaller the amylose particles, preferably of the size 0.005 to 5 µm, most preferably under 1 µm, the , more solid the structure and the better the liquid binding capacity of the gel.

When preferred pressure difference and temperature conditions (such as final process pressure from 10 to 100 kPa and 40 to 100 °C, respectively) are applied in the cooling step, the product will be in liquid state immediately after the pressure has been decreased, and will thus be readily subjected to further processing, and as the product cools, its structure is transformed into a smooth pudding-like gel which can be taken with a spoon.

The starchy vegetable material may consist of corn, such as wheat, oat, rye, barley, maize, rice, millet and buckwheat, vegetables, which in this conjunction stand for the tubers of root tuberous plants, such as potatoes, or vegetables of potato type, such as arrowroot, sweet potato, yam, manioc (tapioca), sago and taro, vegetables such as e.g. soya, peas or beans, or mixtures of these. However, this process is best suited for vegetables and greens, and particularly for potatoes and plants similar to potatoes.

If necessary, the structure can be modified by using additional other thickening agents, such as e.g. pectin, carrageen or guargum.

The starchy material raw material can be matured, and the maturing can be performed by any suitable process, such as e.g. steam or pressure cooking, extrusion or autoclave treatment. However, rapid and short thermal treatments such as e.g. UHT treatment are most appropriate.

The process of the invention achieves extremely soft gelly structures pleasant to the senses from starchy vegetable materials, these structures being particularly suitable for the preparation of puddings, purees and soups. These gelly products can also be used as the raw material of special bakery products when velvety soft structures are desired. The process has the second notable benefit of the nutritional impact of resistant amylose, that is to say that this process produces foodstuffs that are slowly absorbed. This is particularly significant in the group of snack products, which are usually extremely rapidly absorbed and hence not considered to have a good nutritional value. Thirdly, this process allows the preparation of several different types of special diet preparations, such as e.g. milk-free and/or gluten-free (in the case of vegetables and oat) and/or vegetable-based preparations. Fourthly, the nutritional value of the starch raw material can be completely utilised, as compared to the conventional use of the thickening agent alone. Additionally, this process allows corn and vegetables to be prepared as foodstuffs that are easy to take.

Owing to their mild taste and large applicability, potatoes are very suitable as the starchy vegetable material in the edible products of the invention having different flavouring. The mild taste of potatoes does not cover the aromas of other added flavouring components.

The process for preparing a potato snack is described below as a particularly advantageous application:
1. Mashed potatoes are prepared either by mechanical mashing of raw potatoes or by maturing the potatoes by means of various maturing methods known *per se* and by mashing after maturing, or by making a puree from dried potato preparations, e.g. potato flakes, potato flour, potato granules or dried potato particles.
2. Water and flavouring agents are added to the mash. The flavouring agents may comprise e.g. sugar, fat, salt, berries, fruit, juices or components of these and/or other vegetables. If necessary, the ingredients are comminuted to the desired particle size.
3. The mixture is heated under pressure to a temperature above 100 °C and is rapidly cooled by conducting the mixture to a space under lower pressure. The heating can be performed in an autoclave, by surface heat exchangers, as microwave heating or with direct pressurised steam in a closed system. A rapid pressure drop can be produced by releasing the overpressure of the product to normal pressure or by leading the over-heated mixture to a vacuum space. The final temperature of the product can be adjusted by altering the vacuum magnitude. The temperature drop can be accelerated or continued with various cooling systems, such as surface heat exchangers (cold-jacket cooling, surface scraper or plate heat exchanger).
4. The product is packaged aseptically or with a so-called "ultra clean" method. A high temperature results in microbiological purification of the product. Clean packaging of the product results in the required preservability without preservative additions. If necessary, preservatives can be added to the product either before the thermal treatment or after the cooling. If desired, sterile or clean components of the edible end product can be added before the packaging of the product, particularly ingredients or nutrient supplements not suitable for pressure and high temperature treatments.

Before the heating of the mass, the cell wall structure can be degraded if necessary, e.g. by enzymatic means and/or various acids, such as citric acid, so that cell decomposition and starch dispersion will be more complete after the process.

Various nutrient supplements can be added to the mass to be subjected to thermal treatment, e.g. calcium preparations increasing the Ca content of the produced product, fibres, prebiotes, vitamins, fatty acids, vegetable sterols, vegetable stanols and/or esters of these. The best result in terms of preservability is obtained if all the ingredients can be added to the mixture before the heating-cooling step. After the cooling, various ingredients sensitive to heat such as probiotics, aromas or other volatile compounds can still be added to the mass.

The process of the invention allows the preparation of several products for different purposes of use and different target groups. The products are suitable for any consumer. However, the target group of the products prepared as described above comprises especially persons with milk allergies, and with the use of potatoes or other vegetables, also persons with corn allergies. Preferred product groups of the invention comprise snack and breakfast preparations, soups and salty snacks, bakery products, especially fillings and sauces.

The products of the invention are suitable as a diet of special target groups, such as a lactose-free or milk-free diet, a gluten-free and corn-free diet, a vegetable diet, a GMO-free diet and a soya-free vegetable diet.

However, if desired, components based on e.g. milk, corn, meat or fish can be added to the product. If a portion of the water is replaced with milk, the result will be products containing milk but no corn/gluten. If sugar and berries/fruit and juices are replaced with vegetables, meat, fish or other similar extracts and the salt content of the recipe is increased, various salty soups can be made, which are easy to consume after heating. The soups are suitable e.g. as snack/lunch soups or starter soups as part of a larger meal.

The invention is described below by means of examples.

### Example 1: Strawberry pudding

| | Amount, % by weight |
|---|---|
| Potato granules | 5.0 |
| Water | 54.35 |
| Strawberry juice | 25.0 |
| Margarine | 3.0 |
| Sugar | 12.5 |
| Salt | 0.15 |

The potato granules have been prepared by boiling sliced potatoes (not thoroughly), by mashing and drying in a warm air flow.

Potatoes granules were added to hot water (90 °C), the granules were allowed to dissolve and the remaining ingredients were added and stirred. Heating was performed with direct steam at 145 °C under a pressure of approx. 500 to 600 kPa, and immediate cooling at 60 °C under a vacuum of 15 to 20 kPa.

The product was aseptically packaged in single-meal packages and final cooling was performed with the product within the package in a refrigerated space. The result was a smoothly structured pudding free from preservatives, which could be taken with a spoon and was suitable also for persons with milk and corn allergies, with a water content of 77 % by weight and a starch content of 3.6 % by weight.

Strawberry juice can be replaced with whole strawberries, strawberry jam or other berries, fruits or their components or juices.

### Example 2: Berry pudding

| | Amount, % by weight |
|---|---|
| Peeled potatoes | 25.0 |
| Water | 34.35 |
| Juice | 25.0 |
| Vegetable oil | 3.0 |
| Sugar | 12.5 |
| Salt | 0.15 |

Peeled potatoes were boiled until soft and mashed into a puree. Oil and other ingredients were added and stirred. Heating was performed with direct steam at 145 °C under a pressure of approx. 500 to 600 kPa and immediate cooling to 60°C under a vacuum of 15 to 20 kPa.

The product was aseptically packaged in single-meal packages and final cooling was performed with the product within the package in a refrigerated space. The result was a smoothly structured pudding free from preservatives, which could be taken with a spoon and was suitable also for persons with milk and corn allergies, with a water content of 77 % by weight and a starch content of 3.7 % by weight.

### Example 3: Vegetable puree soup

| | Amount, % by weight |
|---|---|
| Potato granules | 8.5 |
| Water | 72.8 |
| Root mixture | 12.5 |
| Vegetable oil/margarine | 3.6 |
| Vegetable stock cube | 2.0 |
| Salt | 0.6 |

The root mixture (carrots, turnips, celeries, parsnips, cabbage) was matured and pureed. Potato granules were added to hot water (90 °C), the granules were allowed to dissolve and the pureed vegetables and the remaining ingredients were added. The mash was stirred. Heating was performed with direct steam at 145°C under a pressure of approx. 500 to 600 kPa, with immediate cooling to 60 °C under a vacuum of 20 kPa. The product was packaged in single-meal packages or large-scale consumer packages, and it was eventually cooled within the package in a refrigerated space. The result after heating was a velvety soft soup free from preservatives and suitable also for persons with milk and corn allergies, having a water content of 85 % by weight and a starch content of 6.5 % by weight

### Example 4: Corn pudding

| | Amount, % by weight |
|---|---|
| Oat flakes | 9.1 |
| Water | 80.5 |
| Sugar | 7.3 |
| Margarine | 2.9 |
| Salt | 0.2 |

All the ingredients were mixed. Heating was performed with direct steam at 145°C under a pressure of approx. 500 to 600 kPa, with immediate cooling to 60°C under a vacuum of 20 kPa. The product was packaged in single-meal packages and was eventually cooled within the package in a refrigerated space. The result was a soft velvety pudding having a water content of 83 % by weight and a starch content of 5.5 % by weight.

## Claims

1. A gelly edible product containing a starchy vegetable material, **characterised in that** at least 50% of the vegetable material cells are broken and the amylose of the starchy vegetable material is dispersed into under 10 µm amylose particles within the amylopectin of the starchy vegetable material, the product having a water content of at least 60 % by weight, and the amount of starch derived from the vegetable material being from 2 to 70 % by weight of the dry substance of the product.

2. A product as defined in claim 1, **characterised in that** the amylose particles have a size in the range from 0.0005 to 5 µm, preferably from 0.005 to 1 µm.

3. A product as defined in claim 1 or 2, **characterised in that** the vegetable material comprises corn, vegetables, greens or mixtures of these.

4. A product as defined in any of the preceding claims, **characterised in that** the vegetable material comprises tuberous roots, preferably potatoes.

5. A product as defined in claim 4, **characterised in that** the vegetable material comprises the entire cell mass of tuberous roots, preferably peeled potatoes.

6. A product as defined in any of the preceding claims, **characterised in** having water content of at least 70 % by weight

7. A product as defined in any of the preceding claims, **characterised in** comprising additionally one or more components selected from the following group: spices or other flavouring agents, colouring agents, structure-modifying agents, preservatives, nutrient and health-promoting components.

8. A product as defined in any of the preceding claims, **characterised in** having the form of a pudding, a puree or a soup.

9. A process for preparing a gelly edible product containing starchy vegetable material, the amount of starch derived from the vegetable material being from 2 to 70 % by weight of the dry substance of the product, **characterised in** comprising the following steps:
a) heating a vegetable material at a temperature of at least 100°C under pressure in an aqueous medium, followed by
b) rapid cooling of the heated product by a pressure drop of at least 100 kPa, whereby at least 50% of the vegetable material cells are broken and the amylose of the starchy vegetable material is dispersed into under 10 µm amylose particles within the amylopectin of the starchy vegetable material, yielding a product having a water content of at least 60 % by weight

10. A process as defined in claim 9, **characterised in that** the pressure is decreased in the cooling step b) by at least 200 kPa, preferably at least 300 kPa, more preferably at least 500 kPa.

11. A process as defined in claim 9 or 10, **characterised in that** in the heating step a) the pressure is 200 to 1,500 kPa, preferably 300 to 1,000 kPa, more preferably 500 to 700 kPa.

12. A process as defined in any of claims.9 to 11; **characterised in that** in the heating step a), the temperature is in the range from 120 to 200 °C, preferably from 13 0 to 180 °C, more preferably from 140 to 160 °C.

13. A process as defined in any of claims 9 to 12, **characterised in that** the pressure is decreased in the cooling step b) to a pressure of 10 to 300 kPa, preferably 10 to 100 kPa, more preferably 10 to 80 kPa, most preferably 15 to 25 kPa.

14. A process as defined in any of claims 9 to 13, **characterised in that** the temperature is decreased in the cooling step b) to a temperature of 40 to 120 °C, preferably 40 to 100 °C, more preferably 40 to 80 °C, most preferably 60 to 65 °C.

15. A process as defined in any of claims 9 to 14, **characterised in that** the pressure is decreased in the cooling step b) by conducting the heated product to a space under vacuum.

16. A process as defined in any of claims 9 to 15, **characterised in that** the heating is rapidly performed in the heating step a), preferably by means of hot water steam.

17. A process as defined in any of claims 9 to 16, **characterised in that** the heating step a) has a duration of 1 to 60 s, preferably 2 to 10 s.

18. A process as defined in any of claims 9 to 17, **characterised in that** the vegetable material is matured before the heating step a).

19. A process as defined in any of claims 9 to 18, **characterised in that** water is added to the vegetable material before the heating step a).

20. A process as defined in any of claims 9 to 19, **characterised in that** flavouring and/or colouring agents are added to the vegetable material before the heating step a).

21. A process as defined in any of claims 9 to 20, **characterised in that** after the cooling step b), additional additives are optionally added to the product, and if necessary, the product is further cooled in order to form a gelly product.

22. A process as defined in any of claims 9 to 21, **characterised in that** the edible product is packaged before gelification to form a product that can be spooned up.

23. An edible product, **characterised in** being prepared with the process defined in any of claims 9 to 22.

## Patentansprüche

1. Essbares Gelprodukt, das ein stärkehaltiges pflanzliches Material enthält, **dadurch gekennzeichnet, dass** wenigstens 50 % der Zellen des pflanzlichen Materials aufgebrochen sind und die Amylose des stärkehaltigen pflanzlichen Materials in Form von weniger als 10 µm großen Amylosepartikeln im Amylopectin des stärkehaltigen pflanzlichen Materials dispergiert ist, wobei das Produkt einen Wassergehalt von wenigstens 60 Gew.-% aufweist und die aus dem pflanzlichen Material gewonnene Stärke 2 bis 70 Gew.-% der Trockensubstanz des Produktes beträgt.

2. Produkt nach Anspruch 1, **dadurch gekennzeichnet, dass** die Amylosepartikel eine Größe im Bereich von 0,0005 bis 5 µm, vorzugsweise 0,005 bis 1 µm haben.

3. Produkt nach Anspruch 1 oder 2, **dadurch gekennzeichnet, dass** das pflanzliche Material Getreide, Gemüse, Blattgemüse oder Mischungen daraus enthält.

4. Produkt nach einem oder mehreren der vorangehenden Ansprüche, **dadurch gekennzeichnet, dass** das pflanzliche Material Wurzelknollen, vorzugsweise Kartoffeln, umfasst.

5. Produkt nach Anspruch 4, **dadurch gekennzeichnet, dass** das pflanzliche Material die gesamte Zellmasse der Wurzelknollen, vorzugsweise von geschälten Kartoffeln, umfasst.

6. Produkt nach einem oder mehreren der vorangehenden Ansprüche, **dadurch gekennzeichnet, dass** es einen Wassergehalt von wenigstens 70 Gew.-% aufweist.

7. Produkt nach einem oder mehreren der vorangehenden Ansprüche, **dadurch gekennzeichnet, dass** es zusätzlich eine oder mehrere Bestandteile enthält, die aus der folgenden Gruppe ausgewählt sind: Gewürze oder andere Aroma- oder Geschmacksstoffe, Farbstoffe, strukturmodifizierende Stoffe, Konservierungsstoffe, Nährstoffe und gesundheitsfördernde Bestandteile.

8. Produkt nach einem oder mehreren der vorhergehenden Ansprüche, **dadurch gekennzeichnet, dass** es in Form eines Puddings, eines Pürees oder einer Suppe vorliegt.

9. Verfahren zur Herstellung eines essbaren Gelproduktes, das ein stärkehaltiges Material enthält, wobei die aus dem pflanzlichen Material gewonnene Stärke 2 bis 70 Gew.-% der Trockensubstanz des Produktes beträgt, **dadurch gekennzeichnet, dass** es die folgenden Schritte umfasst:
a) Erhitzen eines pflanzlichen Materials bei einer Temperatur von wenigstens 100 °C, unter Druck, in einem wässrigen Medium, und anschließendes
b) schnelles Abkühlen des erhitzten Produktes durch Druckabsenkung um wenigstens 100 kPa, wobei wenigstens 50 % der Zellen des stärkehaltigen pflanzlichen Materials aufgebrochen werden und die Amylose des stärkehaltigen pflanzlichen Materials in Form von weniger als 10 µm großen Amylosepartikeln in dem Amylopectin des stärkehaltigen pflanzlichen Materials dispergiert wird, so dass ein Produkt mit einem Wassergehalt von wenigstens 60 Gew.-% erhalten wird.

10. Verfahren nach Anspruch 9, **dadurch gekennzeichnet, dass** der Druck im Abkühlschritt b) um wenigstens 200 kPa, vorzugsweise um wenigstens 300 kPa, mit größerem Vorzug um wenigstens 500 kPa herabgesetzt wird.

11. Verfahren nach Anspruch 9 oder 10, **dadurch gekennzeichnet, dass** in dem Erhitzungsschritt a) der Druck 200 bis 1.500 kPa, vorzugsweise 300 bis 1.000 kPa, mit größerem Vorzug 500 bis 700 kPa beträgt.

12. Verfahren nach einem oder mehreren der Ansprüche 9 bis 11, **dadurch gekennzeichnet, dass** in dem Erhitzungsschritt a) die Temperatur im Bereich von 120 bis 200 °C, vorzugsweise 130 bis 180 °C, mit größerem Vorzug 140 bis 160 °C liegt.

13. Verfahren nach einem oder mehreren der Ansprüche 9 bis 12, **dadurch gekennzeichnet, dass** der Druck in dem Abkühlungsschritt b) auf einen Druck von 10 bis 300 kPa, vorzugsweise 10 bis 100 kPa, mit größerem Vorzug 10 bis 80 kPa und mit größtem Vorzug auf 15 bis 25 kPa herabgesetzt wird.

14. Verfahren nach einem oder mehreren der Ansprüche 9 bis 13, **dadurch gekennzeichnet, dass** die Temperatur im Abkühlungsschritt b) auf 40 bis 120 °C, vorzugsweise 40 bis 100 °C, mit größerem Vorzug 40 bis 80 °C und mit größtem Vorzug auf 60 bis 65 °C herabgesetzt wird.

15. Verfahren nach einem oder mehreren der Ansprüche 9 bis 14, **dadurch gekennzeichnet, dass** der Druck im Abkühlungsschritt b) durch Überführen des erhitzten Produktes in einen vakuumbeaufschlagten Raum herabgesetzt wird.

16. Verfahren nach einem oder mehreren der Ansprüche 9 bis 15, **dadurch gekennzeichnet, dass** das Erhitzen in dem Erhitzungsschritt a) schnell erfolgt, vorzugsweise mittels Heißwasserdampf.

17. Verfahren nach einem oder mehreren der Ansprüche 9 bis 16, **dadurch gekennzeichnet, dass** die Dauer des Erhitzungsschritts a) 1 bis 60 s, vorzugsweise 2 bis 10 s beträgt.

18. Verfahren nach einem oder mehreren der Ansprüche 9 bis 17, **dadurch gekennzeichnet, dass** das pflanzliche Material vor dem Erhitzungsschritt a) gegart wird.

19. Verfahren nach einem oder mehreren der Ansprüche 9 bis 18, **dadurch gekennzeichnet, dass** vor dem Erhitzungsschritt a) eine Zugabe von Wasser zu dem pflanzlichen Material erfolgt.

20. Verfahren nach einem oder mehreren der Ansprüche 9 bis 19, **dadurch gekennzeichnet, dass** vor dem Erhitzungsschritt a) eine Zugabe von Aroma- oder Geschmacksstoffen und/oder Farbstoffen erfolgt.

21. Verfahren nach einem oder mehreren der Ansprüche 9 bis 20, **dadurch gekennzeichnet, dass** nach dem Abkühlungsschritt b) wahlweise weitere Zusatzstoffe dem Produkt hinzugefügt werden und das Produkt, falls erforderlich, weiter abgekühlt wird, um ein Gelprodukt zu erhalten.

22. Verfahren nach einem oder mehreren der Ansprüche 9 bis 21, **dadurch gekennzeichnet, dass** das essbare Produkt vor dem Gelieren verpackt wird, um ein Produkt zu erhalten, dass gelöffelt werden kann.

23. Essbares Produkt, **dadurch gekennzeichnet, dass** es mittels des in einem oder mehreren der Ansprüche 9 bis 22 definierten Verfahrens hergestellt wird.

## Revendications

1. Produit comestible sous forme de gel, contenant un matériau végétal amylacé, **caractérisé en ce qu'**au moins 50% des cellules du matériau végétal sont rompues et que l'amylose du matériau végétal amylacé est dispersé en particules d'amylose de moins de 10 µm dans l'amylopectine du matériau végétal amylacé, le produit ayant une teneur en eau d'au moins 60% en poids et la quantité d'amidon dérivant du matériau végétal étant de 2 à 70% en poids de la substance sèche du produit.

2. Produit tel que défini à la revendication 1, **caractérisé en ce que** les particules d'amylose ont une taille située dans l'intervalle allant de 0,0005 à 5 µm, de préférence de 0,005 à 1 µm.

3. Produit tel que défini à la revendication 1 ou 2, **caractérisé en ce que** le matériau végétal comprend le maïs, des végétaux, des légumes verts ou leurs mélanges.

4. Produit tel que défini dans l'une quelconque des revendications précédentes, **caractérisé en ce que** le matériau végétal comprend des racines de tubercules, de préférence des pommes de terre.

5. Produit tel que défini à la revendication 4, **caractérisé en ce que** le matériau végétal comprend la masse cellulaire complète des racines de tubercules, de préférence des pommes de terre pelées.

6. Produit tel que défini dans l'une quelconque des revendications précédentes, **caractérisé en ce qu'**il a une teneur en eau d'au moins 70% en poids.

7. Produit tel que défini dans l'une quelconque des revendications précédentes, **caractérisé en ce qu'**il comprend en outre, un ou plusieurs composants choisis dans le groupe suivant : épices ou autres agents aromatisants, agents colorants, agents modifiant la structure, conservateurs, nutriments et composants améliorant la santé.

8. Produit tel que défini dans l'une quelconque des revendications précédentes, **caractérisé en ce qu'**il a la forme d'un pudding, d'une purée ou d'une soupe.

9. Procédé de préparation d'un produit comestible sous forme de gel, contenant un matériau végétal amylacé, la quantité d'amidon dérivant du matériau végétal étant de 2 à 70% en poids de la substance sèche du produit, **caractérisé en ce qu'**il comprend les étapes suivantes :
a) chauffage d'un matériau végétal à une température d'au moins 100°C sous pression dans un milieu aqueux, puis
b) refroidissement rapide du produit chauffé par une chute de pression d'au moins 100 kPa, ce par quoi au moins 50% des cellules du matériau végétal sont rompues et l'amylose du matériau végétal amylacé est dispersé en des particules d'amylose de moins de 10 µm dans l'amylopectine du matériau végétal amylacé, conduisant à un produit ayant une teneur en eau d'au moins 60% en poids.

10. Procédé tel que défini à la revendication 9, **caractérisé en ce que** la pression est diminuée dans l'étape de refroidissement b) d'au moins 200 kPa, de préférence au moins 300 kPa, de manière plus préférée au moins 500 kPa.

11. Procédé tel que défini à la revendication 9 ou 10, **caractérisé en ce qu'**à l'étape de chauffage a), la pression est de 200 à 1500 kPa, de préférence de 300 à 1000 kPa, de manière plus préférée de 500 à 700 kPa.

12. Procédé tel que défini dans l'une quelconque des revendications 9 à 11, **caractérisé en ce qu'**à l'étape de chauffage a), la température se situe dans l'intervalle allant de 120 à 200°C, de préférence de 130 à 180°C, de manière plus préférée de 140 à 160°C.

13. Procédé tel que défini dans l'une quelconque des revendications 9 à 12, **caractérisé en ce que** la pression est diminuée dans l'étape de refroidissement b) jusqu'à une pression allant de 10 à 300 kPa, de préférence de 10 à 100 kPa, de manière plus préférée de 10 à 80 kPa, de manière la plus préférée de 15 à 25 kPa.

14. Procédé tel que défini dans l'une quelconque des revendications 9 à 13, **caractérisé en ce que** la température est diminuée dans l'étape de refroidissement b) jusqu'à une température allant de 40 à 120°C, de préférence de 40 à 100°C, de manière plus préférée de 40 à 80°C, de manière la plus préférée de 60 à 65°C.

15. Procédé tel que défini dans l'une quelconque des revendications 9 à 14, **caractérisé en ce que** la pression est diminuée dans l'étape de refroidissement b) en conduisant le produit chauffé dans un espace sous vide.

16. Procédé tel que défini dans l'une quelconque des revendications 9 à 15, **caractérisé en ce que** le chauffage est réalisé rapidement à l'étape de chauffage a), de préférence à l'aide de vapeur d'eau chaude.

17. Procédé tel que défini dans l'une quelconque des revendications 9 à 16, **caractérisé en ce que** l'étape de chauffage a) a une durée de 1 à 60 secondes, de préférence de 2 à 10 secondes.

18. Procédé tel que défini dans l'une quelconque des revendications 9 à 17, **caractérisé en ce que** le matériau végétal est maturé avant l'étape de chauffage a).

19. Procédé tel que défini dans l'une quelconque des revendications 9 à 18, **caractérisé en ce que** de l'eau est ajoutée au matériau végétal avant l'étape de chauffage a).

20. Procédé tel que défini dans l'une quelconque des revendications 9 à 19, **caractérisé en ce que** des agents aromatisants et/ou colorants sont ajoutés au matériau végétal avant l'étape de chauffage a).

21. Procédé tel que défini dans l'une quelconque des revendications 9 à 20, **caractérisé en ce qu'**après l'étape de refroidissement b), des additifs supplémentaires sont le cas échéant ajoutés au produit, et si nécessaire, le produit est encore refroidi pour former un produit sous forme de gel.

22. Procédé tel que défini dans l'une quelconque des revendications 9 à 21, **caractérisé en ce que** le produit comestible est emballé avant gélification pour former un produit qui peut être pris à la cuillère.

23. Produit comestible, **caractérisé en ce qu'**il est préparé par le procédé tel que défini dans l'une quelconque des revendications 9 à 22.
